# EUROPEAN PATENT SPECIFICATION

(11) **EP 2 254 423 B1**
(45) Date of publication and mention of the grant of the patent: **09.04.2014**
(21) Application number: 09712484.6
(22) Date of filing: 05.02.2009
(51) Int. Cl.: A23G 9/04, A23G 9/22, G07F 9/10, A23L 3/36, A23G 1/36, A23G 9/32, A23G 4/06, A23G 1/32

(54) **IMPROVED CONFECTIONERY AROMA CONTAINING PRODUCTS**
PRODUKTE MIT VERBESSERTEM SÜßWAREAROMA
PRODUITS DE CONFISERIE AMÉLIORÉS CONTENANT UN ARÔME

(30) Priority: 19.02.2008 US 33451
(43) Date of publication of application: 01.12.2010
(73) Proprietor: Südzucker Aktiengesellschaft Mannheim/Ochsenfurt, 68165 Mannheim (DE)
(72) Inventor: KOWALCZYK, Jörg, 67304 Eisenberg/Steinborn (DE); WILLIBALD-ETTLE, Ingrid, 76829 Landau (DE); ARENZ, Margit, 56820 Nehren (DE)
(74) Representative: Schrell, Andreas
(86) International application number: PCT/EP2009/000788
(87) International publication number: WO 2009/103428

(56) References cited:
- EP-A- 1 040 765
- JP-A- 9 327 265
- US-A- 4 139 541
- US-A1- 2003 129 143
- US-A1- 2004 253 189
- US-A1- 2007 166 430

## Description

The present invention relates to confectionery products comprising an isomalt component, a geraniol containing aroma component and at least one product additive as well as processes to obtain them.

In consideration of the increasing demand of customers for confectionery products, which do not only appeal because of their taste but also because of the functional benefits, more and more innovative confectioneries are developed. Thus, it is desired to develop confectionery products, which do not only provide a good taste but exert furthermore an additional effect.

US 2003/129143 discloses confectionery compositions which provide enhanced oral malodour benefits comprising specified metal cations, water and confectionery carrier. Geraniol can be used as essential oil having anti-bacterial properties.

US 2004/253189 discloses breath freshening and oral cleansing product using geraniol. The oral products of this invention are chewing gums, confections, mouthwashes, mouth sprays and edible thin film products. In effective amounts, geraniol is delivered in an oral product for convenient oral cleansing and breath freshening benefits.

Recently, it has been described that distinct aromatic compounds are exhalated from human skin after intake of essential oil. The oral intake of essential oil with water resulted in an augmented release from geraniol and citronellol which were detected from hand skin using gas chromatograph mass spectrometry (Akiyama, Asaku and Itoh, Kenji, Aroma Research (2006), Vol. 7(1), 63-65). Further, the oral intake of rose oil resulted in the detection of linalool, citronellol and especially of geraniol, which are the main components of rose essential oil, from the skin (Akiyma, Asaku et al., Bunseki Kagaku (2006), 55 (10), 787-792-792).

Geraniol, also called rhodinol, is a monoterpenoid and an alcohol. It is the primary part of oil-of-rose, palmarosa oil and citronella oil. It also occurs in small quantities in geranium, lemon and many other essential oils. It appears as a clear to pale-yellow oil, which is insoluble in water, but soluble in most common organic solvents. It has a rose-like odour, for which it is commonly used in perfumes. Further-more, research has shown geraniol to be an effective plant based insect repellent.

The technical problem underlying the present invention is to provide confectionery products, which not only fulfil organoleptical demands of the consumer, but further harbour at least one further additional beneficial effect which increases the consumers' acceptance. In particular, it is desired to provide confectionery products which show an improved, in particular more constant and continuous release of aroma, namely geraniol and preferably are particularly storage-stable.

The present invention solves the underlying technical problem by the provision of a confectionery product, which comprises an isomalt component, a geraniol containing aroma component and at least one product additive.

Thus, the present invention solves the above-identified technical problem by providing a confectionery product comprising a mixture of an isomalt component, a geraniol containing aroma component and at least one product additive, wherein the confectionery product comprises 1.0 to 99.8 weight-% of the isomalt component, 0.1 to 5.0 weight-%, preferably 0.2 to 4.0 weight-%, most preferably 0.5 to 2.0 weight-% of the geraniol containing aroma component and 0.1 to 98.0 weight-% of at least one product additive (each based on total weight of confectionery product and all constituents adding up to 100.0% of dry matter of the confectionery product). The combination of the isomalt component with the geraniol containing aroma component surprisingly leads in confectionery products, in particular in chewing gums, coated chewing gums, soft caramels, tablets and hard caramels, to a very favourable aroma release profile, in particular a continuous, long lasting and constant release and exhalation from the skin of the consumer which in addition very rapidly starts after consumption of the product. Furthermore, it could be shown that the isomalt component increases the storage stability of the aroma component in the confectionery product.

The exhalation of geraniol leads to a pleasant rose-like odour which is released from the skin of the consumer after consumption of the confectionery product. It could surprisingly be shown that the combination of an isomalt component together with a geraniol containing aroma component advantageously leads to an even elevated, more constant and continuous exhalation of the geraniol from the skin of the consumer compared to the intake of a geraniol containing aroma component alone without the isomalt component. Without being bound to any theory, it is assumed that the elevated exhalation is a result of a more effective uptake after consumption of the geraniol due to the combination with isomalt. This in turn leads to an early beginning, elevated, prolonged and promoted release of the geraniol from the consumers' skin. Thus, the isomalt component acts as an odour release elevator. Furthermore, it has been shown that the isomalt component within the confectionery product of the present invention has the advantage to mask the unpleasant taste of the geraniol. As a further advantage it could be shown that despite its low water solubility the geraniol containing aroma component exhibits in combination with the isomalt component a homogenous distribution, especially when used in hard caramels. In chewing gums and soft candies an improved, in particular longer lasting chewability was observed.

In the context of the present invention, the term "isomalt component" preferably encompasses isomalt, isomalt ST, isomalt GS, an isomalt variant or component thereof.

In a preferred embodiment of the present invention, the isomalt component is selected from the group consisting of 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), isomalt, isomalt ST and isomalt GS.

In the context of the present invention, isomalt is a mixture of 1,6-GPS and 1,1-GPM, while isomalt ST is a mixture of 53 to 47%-1,6-GPS and 47 to 53% 1,1-GPM. Isomalt GS is a mixture of 71 to 79% 1,6-GPS and 29 to 21% 1,1-GPM, preferably 75% 1,6-GPS to 25% 1,1-GPM (values given in weight-% on dry matter).

In a further preferred embodiment, it is foreseen to use isomalt variants. In the context of the present invention, isomalt variants are for instance mixtures of 10 to 50% 1,6-GPS, 2 to 20% 1,1-GPS and 30 to 70% 1,1-GPM or mixtures of 5 to 10% 1,6-GPS, 30 to 40% 1,1-GPS and 45 to 60% 1,1-GPM. Isomalt variants may also be in form of 1,6-GPS enriched mixtures. 1,6-GPS enriched mixtures have an 1,6-GPS amount of 58 to 99 % and an 1,1-GPM amount of 42 to 1 %. 1,1-GPM enriched mixtures have an 1,6-GPS amount of 1 to 42 % and an 1,1-GPM amount of 58 to 99 %.

In a further preferred embodiment of the present invention, the isomalt component used is a milled and agglomerated isomalt, in particular a milled and agglomerated isomalt, wherein the milled isomalt particles have a diameter of less than 100 µm, preferably less than 50 µm. Preferably, such a milled and agglomerated isomalt is isomalt DC.

In a preferred embodiment of the present invention, the confectionery product comprises the isomalt component in form of particles, wherein 90% of said particles have a diameter of less than 100 µm, preferably less than 50 µm.

Particle size as described herein is measured by scanning electron microscopy (SEM) or other optical or scanning techniques, for example using a coulter counter.

In a preferred embodiment of the present invention, the isomalt component is a mixture of isomalt and maltitol, preferably of isomalt GS or isomalt ST and maltitol, further preferred isomalt and maltitol syrup or of isomalt GS or isomalt ST and maltitol syrup. Preferably, the mixture comprises 60 to 80%, in particular 70% isomalt, preferably isomalt ST or GS, and 40 to 20%, in particular 30 % maltitol (values given in weight-% on dry matter).

In a preferred embodiment of the present invention, the geraniol containing aroma component is a geraniol containing oil.

In a preferred embodiment of the present invention, the geraniol containing oil comprises 5 to 90, preferably 10 to 80, most preferred 10 to 20 weight-% (based on the total weight of oil) geraniol.

In a preferred embodiment of the present invention, the geraniol containing oil is an oil from geranium, lemon, coriander, bay leaves, nutmeg, tobacco and rose. In a preferred embodiment it is an oil-of-rose, palmarosa oil or citronella oil, in particular of the java type.

In a preferred embodiment of the present invention, the confectionery product is sugar-free, in particular free of sucrose, free of glucose, free of lactose and/or free of fructose or free of combinations of at least two of these sugars.

In a preferred embodiment of the present invention, the confectionery product is tooth-friendly.

In a preferred embodiment of the present invention, the confectionery product is selected from the group consisting of filled chewing gums, non-filled chewing gums, hard caramels, also called hard candies, soft caramels, also called soft candies, toffee, pastilles, tablets, gum, jellies, marshmallows, nougat, lozenges, fudge, fondant or chocolate products.

According to the invention, it could be shown that the mixture of the isomalt component and the geraniol containing aroma component provides hard candies showing a very high transparency, which are shiny and exhibit a very constant and highly efficient release of aroma. Furthermore, the hard candies of the present invention show a very homogenous distribution of the geraniol containing aroma component and improved sucking behaviour and a well-balanced aroma and sweetness impression, while simultaneously showing extraordinarily good storage stability, namely no visible crystallisation or the like.

Furthermore, coated chewing gums of the present invention also show a very good storage stability, a constant and good release of aroma, a well balanced aroma and sweetness impression and a constant and homogenous distribution of the geraniol containing aroma component.

Furthermore, the tablets or compressed products of the present invention show an improved and high storage stability, a well balanced aroma and sweetness impression as well as a homogenous and even distribution of the geraniol containing component.

Soft caramels or soft candies of the present invention show a well-balanced aroma and sweetness impression, a highly efficient constant release of aroma, a very good and even distribution of the geraniol containing component, a high storage stability and an improved prolonged chewability.

In a preferred embodiment of the present invention, the confectionery product is a coated product. Preferably, the coated product is a coated filled or non-filled chewing gum, a coated jelly, a coated tablet, a coated soft caramel or a coated chocolate product.

In a preferred embodiment of the present invention, the geraniol containing aroma component is located in the preferred coated confectionery product of the present invention solely in the coating. In another preferred embodiment of the present invention, the geraniol containing aroma component is located in the confectionery product according to the present invention solely in the centre of the confectionery product and not in the coating. In both instances, at least part of the isomalt component is associated with the geraniol containing aroma component, namely in case the geraniol containing component is located solely in the coating, at least part of the isomalt component is also contained in the coating. In another preferred embodiment, wherein the geraniol containing component is located solely in the centre of the coated confectionery product of the present invention, at least part of the isomalt component is also contained in the centre.

In another preferred embodiment of the present invention, the geraniol containing component together with the isomalt component is located both in the coating and in the centre of the preferred coated confectionery products of the present invention.

In a preferred embodiment of the present invention, the coated product comprises 15 to 70, preferably 25 to 45, weight-% product coating (based on dry weight of the overall coated product). Preferably, the coated product comprises 30 to 85, preferably 55 to 75 weight-% product core (based on the dry weight of the overall coated product).

In a particularly preferred embodiment, the product coating may comprise 1, 2 or more, for instance 50 to 100 layers of product coating material. In a particularly preferred embodiment, said layers may be of the same or different compositions.

In a further preferred embodiment, it is evident that depending upon the specific nature of the confectionery product, product additives may be present in the confectionery product or its coating.

In the context of the present invention, a product additive is any substance which may be added into the preparation process to easily influence the preparation process itself and/or influence product characteristics, which may either be relevant for the process or for the finally obtained product, for instance its organoleptic, sensoric, physiological, storage or optical behaviour.

Depending upon the nature of the confectionery product, it comprises at maximum 98 weight-%, namely 0.1 to 98 weight-%, preferably 0.1 to 90 weight-%, preferably 10 to 85 weight-%, most preferably 1 to 75 weight-% of such product additives.

In a preferred embodiment of the present invention, the product additive is selected from the group consisting of sugars, preferably tooth-friendly sugars, sugar alcohols, intense sweeteners, hydrocolloid, gum base, plastifiers, lubricant, emulsifiers, protein components, milk components, dairy ingredients, fat and fat substitutes, vegetable fat, vitamins, minerals, pharmaceutically active ingredients, preservatives, further aroma, flavourings, such as peppermint, menthol, fruit, strawberry flavour, colours, TiO₂, edible acids, such as citric acid, and dietary fibres.

In a preferred embodiment of the present invention, the tooth-friendly sugar is selected from the group consisting of isomaltulose, nutriose, leukrose and polydextrose. In a preferred embodiment, the sugar is isomaltulose. In a further preferred embodiment, the amount of non-tooth-friendly ingredients is at maximum 1 weight-% (on total weight of the confectionery product).

In a further preferred embodiment of the present invention, the sugar alcohol is selected from the group of xylitol, mannitol, maltitol, erythritol, lactitol or sorbitol.

In a particularly preferred embodiment of the present invention, the isomalt component is the only sweetening agent present in the confectionery product of the present invention. In a further preferred embodiment of the present invention, the isomalt component is the only sugar alcohol present in the confectionery product of the present invention. In a further preferred embodiment, the isomalt component is the only sweetening agent providing a body to the confectionery product of the present invention. Thus, in this preferred embodiment, in additton to the isomalt component, an intense sweetener may also be present in the confectionery product.

In a preferred embodiment of the present invention, the intense sweetener is selected from the group of cyclamate, saccharin, aspartame, glycyrrhicine, neohesperidine-dihydrochalcone, steveoside, thaumatin, monellin, acesulfame, alitame, sucralose or a mixture thereof.

It is a further object of the present invention to provide a process for the preparation of a hard caramel mass comprising 1 to 99.8 weight-% of an isomalt component, 0.1 to 5.0 weight-%, preferably 0.2 to 4.0 weight-%, most preferably 0.5 to 2.0 weight-% of a geraniol containing aroma component and 0.1 to 98 weight-% of at least one product additive, wherein the process comprises a) dissolving the isomalt component in an aqueous medium, b) boiling the obtained solution to evaporate the aqueous medium, c) cooling the obtained mass, d) adding and distributing the at least one product additive to obtain a hard caramel mass, wherein the geraniol containing aroma component is added and homogenously distributed in the boiled sweetener at the end of step b) or in step c) or d). In the context of the present invention, the end of step b) is reached once substantially all of the aqueous medium has been evaporated so as to leave a highly viscous hard caramel mass. Preferably, the aqueous medium is water.

In a preferred embodiment of the present invention, the boiling in step b) is done under vacuum.

A preferred embodiment of the present invention relates to a process for the preparation of a hard caramel mass comprising 1 to 99.8 weight-% of an isomalt component, 0.1 to 5.0 weight-%, preferably 0.2 to 4.0 weight-%, most preferably 0.5 to 2.0 weight-% of a geraniol containing aroma component and 0.1 to 98 weight-% of at least one product additive, wherein the process comprises a') melting the isomalt component, b') cooling the obtained hard caramel mass, c') adding and distributing the at least one product additive to obtain a hard caramel mass, wherein the geraniol containing aroma component is added and homogenously distributed in step a') or step b') or c').

In a preferred embodiment of the present invention, the hard caramel mass as obtained according to the above boiling or melting process is shaped into a hard caramel.

A preferred embodiment of the present invention relates to a process for the preparation of a coated confectionery product, which comprises a product core or product centre and a product coating, the product coating comprising at least the coating ingredients at least an isomalt component, a geraniol containing aroma component and at least one product additive, preferably according to the above, which process comprises a) applying a coating medium comprising at least partially the coating ingredients to said product core and b) drying the coated product so as to obtain a product coating, which coating comprises 1 to 99.8 weight-% isomalt component, 0.1 to 5.0 weight-%, preferably 0.2 to 4.0 weight-%, most preferably 0.5 to 2.0 weight-% of a geraniol containing aroma component and 0.1 to 98 weight-% (each based on dry weight of product coating) of at least one product additive. If in one preferred embodiment only a part of the coating ingredients is added into the coating medium, then the other part is applied in a dusting or drying step thereafter.

In the context of the present invention, drying of the coated core with a dry and powdered ingredient is also called dusting.

Preferably, the coating medium is an aqueous medium, particularly water.

In a preferred embodiment of the present invention, the drying of step b) is done by subjecting the coated product to air, in particular an air stream, having a temperature of 20°C to 80°C, preferably 30°C to 80°C.

In a preferred embodiment of the present invention, the drying step b) is done by adding at least a part of the coating ingredients in dry and powdered form to the coated products during step b).

In a preferred embodiment of the present invention, the coating medium is a coating solution or coating suspension.

In a preferred embodiment of the present invention, after step a) and before step b) the coated products are subjected to a distribution step, wherein the coated products are agitated to allow a homogenous distribution of the coating medium on the product core.

In a preferred embodiment of the present invention, in step a) all coating ingredients are applied in form of a coating medium, in particular a coating suspension.

In a preferred embodiment of the present invention, a part of the coating ingredients is applied in the coating medium and a further part is applied in dry and powdered from, both of them in step a).

In a further preferred embodiment of the present invention, all of the geraniol containing aroma component of the product coating is added in step b).

In a preferred embodiment of the present invention, all of the geraniol containing aroma components of the product coating is added in form of the oil and part of the isomalt component is added in dry and powdered form, both of them in step b).

In a further preferred embodiment of the present invention, at least a part if the isomalt component is added in dry and powdered from in step b).

In a preferred embodiment of the present invention, steps a) and b) are repeated one or more times, preferably 8 to 120 times.

In a preferred embodiment of the present invention, steps a) and b) are repeated 3 to 10 times.

In a preferred embodiment of the present invention, the coating ingredients applied in powder form represent 30 to 75% by weight, preferably 40 to 75% by weight of the overall amount of the coating ingredients (each based on dry weight of the product coating).

In a preferred embodiment of the present invention, the process of the present invention is carried out in at least two phases, wherein in a first phase of the process, the coating medium comprising a part of the coating ingredient is applied in step a) and the drying is done in step b) by adding part of the coating ingredients in dry and powdered form to the coated products one or more repeated times and wherein in a second phase of the process the coating medium is applied to the coated products in step a) and dried in step b) by subjecting the coated products to air without addition of dry and powdered coating ingredients one or more repeated times.

In a preferred embodiment of the present invention, the drying of step b) is done both by subjecting the coated products to air having a temperature of 20 to 80°C and by adding part of the coating ingredients in dry and powdered form to the coated products during step b).

In a preferred embodiment of the present invention, steps a) and b) are repeated 3 to 50 times.

In a preferred embodiment of the present invention, in a first phase of the repetitions of steps a) and b) the drying of step b) is done by adding part of the coating ingredients in dry and powdered form to the coated products and wherein in a second phase of the repetitions only the coating medium is applied and the drying of step b) is done by subjecting the coated product to air having a temperature of 20 to 80°C.

Further preferred embodiments of the present invention are the subject-matter of the subclaims.

The invention is illustrated by way of the following examples:

### Example 1 - tablets

### Recipe:

| | |
|---|---|
| isomalt DC 100 | 9.9 kg |
| geraniol oil | 50 g |
| acesulfam K | 15 g |
| citric acid | 30 g |
| aroma (strawberry) | 50g |
| magnesium stereat | 50 g |

### Preparation:

The components were mixed and compressed in a rotary press.

| | |
|---|---|
| Tablet diameter: | 12 mm |
| Tablet weight | app. 600 mg |
| pressure force | 8-15 kN |
| hardness | 180-220 N |

Very storage-stable tablets were obtained with favourable organoleptic and sensoric properties, which provide a pleasant and long-lasting, continuously released rose-like odour by exhalation from the skin.

### Example 2 - Preparation of a hard caramel

### Recipe:

| | |
|---|---|
| isomalt ST | 23.0 kg |
| geraniol oil | 50 g |
| water | 8.5 kg |
| menthol | 0.1 kg |
| peppermint | 0.2 kg |
| acesulfam K | 25 g |

### Preparation:

Isomalt ST and water are mixed in a pan followed by heating to dissolve the isomalt and boiling this mixture at a temperature from 155 to 160°C. A 5 minute vacuum was applied so as to obtain a highly viscous caramel mass and after cooling of the mass to 110°C to 115°C the citric acid, the aroma, acesulfam K and the geraniol oil are added and are homogenously distributed. The so prepared hard caramel mass was moulded to form hard candies.

The above-identified recipe without water has also been processed directly to a hard caramel in a melt extrusion process by simultaneously extruding the ingredients and forming hard caramels therefrom.

In a continuously operating process, the geraniol oil has been added after boiling of the isomalt ST solution into the highly viscous, but still liquid hard caramel mass, which thereafter is transferred on a cooling belt and further processed by moulding and cooling in order to obtain the final hard caramels.

Hard caramels were obtained with favourable organoleptic, a high transparency and improved sensoric properties, which provide a pleasant long-lasting and continuously released rose-like odour by exhalation from the skin. The hard caramels shown an excellent storage stability.

### Example 3 - Chewing gum

### Recipe:

| | |
|---|---|
| chewing base Nostic TWA | 1400 g |
| isomalt ST | 2200 g |
| sorbitol syrup (70% dry substance) | 600 g |
| geraniol oil | 40 g |
| glycerol | 150 g |
| menthol | 150 g |
| flavour (spearmint) | 100 g |
| aspartam | 2.5 g |
| acesulfam K | 2.5 g |

### Preparation:

The chewing gum base is heated at approximately 55°C in a heating oven, before it is placed in a kneader; subsequently, the chewing gum base is kneaded for 1-2 minutes. During the kneading, the powdery additives (isomalt ST (1:1 mixture of 1,6-GPS and 1,1-GPM), geraniol oil, sweetener, menthol) are gradually added in the indicated sequence; afterwards, flavour, sorbitol syrup and glycerol are added. The kneading continues until the mass is homogenous (end temperature approximately 45°C). The mass is taken from the kneader and divided into portions which weigh approximately 1 kg.

The chewing gum mass divided into portions is placed in intermediate storage for approximately 15 to 20 min on a talc-strewn substrate, extruded with a suitable extruder, and further processed as usual.

Very storage-stable chewing gums were obtained with prolonged chewability, favourable organoleptic and sensoric properties, which provide a pleasant, long-lasting and continuously released rose-like odour by exhalation from the skin.

### Example 4 - Preparation of a coated chewing gum

### A) Composition of the coated chewing gum:

### Center:

**table 1**

| Ingredient | Amount [% based on weight of center] |
|---|---|
| Glycerol | 1.78 |
| Water | 1.30 |
| Xylitol | 7.81 |
| Mannitol | 7.92 |
| Maltitol | 0.63 |
| Sorbitol | 44.40 |
| 1,1-Glucopyranosyl-mannitol (1,1-GPM) | 0.02 |
| 1,6-Glucopyranosyl-sorbitol (1,6-GPS) | 0.06 |
| Gum base | 36.08 |

### Coating:

**table 2**

| Ingredient | Amount [% based on dry weight of coating] |
|---|---|
| Isomalt GS (75 weight-% 1,6-GPS, 25 weight-% 1,1-GPM) | 94.00 |
| Gum arabic | 2.00 |
| geraniol oil | 4.00 |

### B) Coating with geraniol oil

A coating solution comprising as coating ingredients 5500 g isomalt GS, 410 g of a 50% gum arabic solution (205 g gum arabic, dry matter) and 3980 g water was prepared. Chewing gum cushions with a weight of 1,018 g/pc are provided. In a coating drum, the coating solution is applied to the chewing gum cushions at 60°C, wherein during said coating a mixture of isomalt GS/PA (powder, 90% of the particles < 50 µm) and 0.1 % SiO₂ is sequentially added as powdery dry charges in a first phase of 2 x 160 g, in a second phase of 7 x 150 g and in a third phase of 4 x 170 g. The applied coating layers are dried after each cycle with a constant air stream with a temperature ranging from 23 to 28°C. Afterwards, the geraniol oil is added to the coating solution and the coating solution is applied in a fourth phase in 5 cycles, in a fifth phase in 5 cycles and in a sixth phase in 3 cycles. The applied coating layers are dried after each cycle with a constant air stream. Thus, in overall, a coated product is prepared comprising 33 weight-% coating and about 67 weight-% (each based on dry weight of final product) chewing gum centre.

A coated chewing gum was obtained with favourable organoleptic and sensoric properties, which provides a constant and continuously released pleasant rose-like odour by exhalation from the skin. The coating showed a very good storage stability.

### Example 5 - Preparation of a coated chewing gum

### Coating recipe:

| | |
|---|---|
| Isomalt GS | 65 % |
| Gum Arabic Sol. (50 %) | 4,1 % |
| Water | 29,8 % |
| Aspartame | 0,05 % |
| Acesulfame K | 0,05 % |
| Titaniumdioxide | 1 % |

### Coating process:

| Phase | Number of Cycles | Total syrup amount [g] | Syrup amount per cycle [g] |
|---|---|---|---|
| 1 | 1 | 120 | 120 |
| 2 | 6 | 540 | 90 |
| 3 | 3 | 210 | 70 |
| 4 | 45 | 4050 | 90 |
| 5 | 5 | 350 | 70 |
| 6 | 3 | 180 | 60 |
| 7 | 1 | 50 | 50 |
| 8 | Waxing Phase | | |

### Powder Addition:

In Phase 1): 1 x 100 g Isomalt ST/PF
In Phase 2): 6 x 90 g Isomalt ST/PF Flavouring:
In Phase 3): 3 x 20 g geraniol oil = 0,5 % of total chewing gum mass

### Process Data:

| | |
|---|---|
| Center: | 7,5 kg |
| Coating Time: | 175 min |
| Temperature Coating Solution: | 55°C |
| Center Weight: | 1,02 g / piece |
| Layer Thickness: | 34,6% |
| Program: | Standard Isomalt GS Solution Coating |
| Drying Air: | 25°C / 15 - 20 % r.H. |

A coated chewing gum was obtained with favourable organoleptic and sensoric properties, which provides a constant and continuously released pleasant rose-like odour by exhalation from the skin. The coating showed a very good storage stability.

## Claims

1. A confectionery product comprising an isomalt component, a geraniol containing aroma component and at least one product additive, wherein the confectionery product comprises 1 to 99.8 weight-% of the isomalt component, 0.1 to 5.0 weight-% of the geraniol containing aroma component and 0.1 to 98 weight-% of the at least one product additive (each based on total weight of confectionery product and all constituents adding up to 100% of the dry matter of the confectionery product), wherein the isomalt component is selected from the group consisting of 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), isomalt variants, isomalt, isomalt GS and a mixture of isomalt and maltitol, and wherein the geraniol containing aroma component is a geraniol containing oil comprising 5 to 90 weight-% (based on total weight of oil) geraniol.

2. The confectionery product of claim 1, wherein the isomalt component is a mixture of isomalt GS or ST and maltitol, a mixture of isomalt and maltitol syrup or a mixture of isomalt GS or ST and maltitol syrup.

3. The confectionery product of any one of the preceding claims, wherein the mixture of isomalt and maltitol comprises 60 to 80 weight-% isomalt and 40 to 20 weight-% maltitol (weight-% based on dry matter).

4. The confectionery product according to any one of the preceding claims, wherein the confectionery product is sugar-free, tooth-friendly or both.

5. The confectionery product according to any one of the preceding claims, wherein the product is selected from the group of chewing gums, hard caramels, soft caramels, toffee, pastille, tablets, gum, jellies, marshmallows, nougat, lozenges, fudge, fondant or chocolate products.

6. The confectionery product according to any one of the preceding claims, wherein the confectionery product is a coated product, preferably a coated chewing gum, a coated jelly, a coated tablet, a coated soft-caramel or a coated chocolate product.

7. The confectionery product according to any one of the preceding claims, wherein the product additive is selected from the group consisting of sugars, sugar alcohols, intense sweeteners, hydrocolloid, gum base, plastifiers, emulsifyers, protein components, milk components, dairy ingredients, fat and fat substitutes, vegetable fat, vitamins, minerals, pharmaceutically active ingredients, preservatives, aroma, flavourings, such as peppermint, menthol, fruit, strawberry flavour, colours, TiO₂, edible acids, such as citric acid, and dietary fibres.

8. The confectionery product according to any one of the preceding claims, wherein the sugar is selected from the group consisting of isomaltulose, nutriose, leucrose and polydextrose, the sugar alcohol is selected from the group consisting of xylitol, mannitol, maltitol, erythritol, lactitol and sorbitol or both.

9. The confectionery product according to any one of the preceding claims, wherein the intense sweetener is selected from the group of cyclamate, saccharin, aspartame, glycyrrhicine, neohesperidine-dihydrochalcone, steveoside, thaumatin, monellin, acesulfame, alitame, sucralose or a mixture thereof.

10. A process for the preparation of a hard caramel mass comprising 1 to 99.8 weight-% of an isomalt component, 0.1 to 5.0 weight-% of a geraniol containing aroma component and 0.1 to 98 weight-% of at least one product additive, wherein the isomalt component is selected from the group consisting of 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), isomalt variants, isomalt, isomalt GS and a mixture of isomalt and maltitol, and wherein the geraniol containing aroma component is a geraniol containing oil comprising 5 to 90 weight-% (based on total weight of oil) geraniol and wherein the process comprises a) dissolving the isomalt component in an aqueous medium, b) boiling the obtained solution to evaporate the aqueous medium, c) cooling the obtained mass, d) adding and distributing the at least one product additive to obtain a hard caramel mass, wherein the geraniol containing aroma component is added and homogenously distributed in the boiled sweetener at the end of step b) or in step c) or d).

11. A process for the preparation of a hard caramel mass comprising 1 to 99.8 weight-% of an isomalt component, 0.1 to 5.0 weight-% of a geraniol containing aroma component and 0.1 to 98 weight-% of at least one product additive, wherein the geraniol containing aroma component is a geraniol containing oil comprising 5 to 90 weight-% (based on total weight of oil) geraniol and wherein the process comprises a') melting the isomalt component, b') cooling the obtained hard caramel mass, c') adding and distributing the at least one product additive to obtain a hard caramel mass, wherein the geraniol containing aroma component is added and homogenously distributed in step a'), b') or c').

12. A process for the preparation of a hard caramel mass according to any one of claims 10 or 11, wherein the hard caramel mass of any one of claims 10 or 11 is shaped to a hard caramel.

13. A process for the preparation of a coated confectionery product comprising a product core and a product coating, the coating comprising at least the coating ingredients at least an isomalt component, a geraniol containing aroma component and at least one product additive, preferably according to claims 1 to 9, which comprises a) applying a coating medium comprising at least partially the coating ingredients to said product core, and b) drying the coated product, so as to obtain a product coating, which coating comprises 1 to 99.8 weight-% isomalt component, 0.1 to 5.0 weight-% geraniol containing aroma component and 0.1 to 98 weight-% (each based on dry weight of product coating) of at least one product additive.

14. The process of claim 13, wherein the drying of step b) is done by subjecting the coated product to air, in particular an air stream, having a temperature of 20°C to 80°C, preferably 30°C to 80°C.

15. The process of claim 13 or 14, wherein the drying of step b) is done by adding at least a part of the coating ingredients in dry and powdered form to the coated products during step b).

16. The process according to claims 13 to 15, wherein after step a) and before step b) the coated products are subjected to a distribution step, wherein the coated products are agitated to allow a homogenous distribution of the coating medium on the product core.

17. The process according to any one of claims 13, 14 or 16, wherein in step a) all coating ingredients are applied in form of a coating medium, in particular a coating suspension.

18. The process according to any one of claims 13 to 16, wherein a part of the coating ingredients is applied in the coating medium and a further part is applied in dry and powdered form, both of them in step a).

## Patentansprüche

1. Süßwarenprodukt, aufweisend eine Isomaltkomponente, eine Geraniol-haltige Aromakomponente und mindestens einen Produktzusatzstoff, wobei das Süßwarenprodukt die Isomaltkomponente in einer Menge von 1 bis 99,8 Gewichtsprozent, die Geraniol-haltige Aromakomponente in einer Menge von 0,1 bis 5,0 Gewichtsprozent und den mindestens einen Produktzusatzstoff in einer Menge von 0,1 bis 98 Gewichtsprozent aufweist (jeweils bezogen auf das Gesamtgewicht des Süßwarenprodukts, wobei die Summe der Inhaltsstoffe 100% der Trockensubstanz des Süßwarenprodukts ausmacht), wobei die Isomaltkomponente aus der Gruppe ausgewählt ist, die aus 1,1-GPS (1-O-α-D-Glucopyranosyl-D-sorbit), 1,1-GPM (1-O-α-D-Glucopyranosyl-D-mannit), 1,6-GPS (6-O-α-D-Glucopyranosyl-D-sorbit), Isomaltvarianten, Isomalt, Isomalt GS und ein Gemisch aus Isomalt und Maltit besteht, und wobei es sich bei der Geraniol-haltigen Aromakomponente um ein Geraniol-haltiges Öl, das Geraniol in einer Menge von 5 bis 90 Gewichtsprozent (bezogen auf das Gesamtgewicht des Öls) aufweist, handelt.

2. Süßwarenprodukt nach Anspruch 1, wobei es sich bei der Isomaltkomponente um ein Gemisch aus Isomalt GS oder ST und Maltit, ein Gemisch aus Isomalt und Maltitsyrup oder ein Gemisch aus Isomalt GS oder ST und Maltitsyrup handelt.

3. Süßwarenprodukt nach einem der vorherigen Ansprüche, wobei das Gemisch aus Isomalt und Maltit 60 bis 80 Gewichtsprozent an Isomalt und 40 bis 20 Gewichtsprozent an Maltit aufweist (Gewichtsprozentangaben bezogen auf die Trockensubstanz).

4. Süßwarenprodukt nach einem der vorherigen Ansprüche, wobei das Süßwarenprodukt zuckerfrei, zahnfreundlich oder beides ist.

5. Süßwarenprodukt nach einem der vorherigen Ansprüche, wobei das Produkt aus der Gruppe Kaugummis, Hartkaramellen, Weichkaramellen, Toffee, Pastillen, Tabletten, Gummi, Gelees, Schaumsüßwaren, Nugat, Lutschtablette, Fudge, Fondant oder Schokoladeprodukte ausgewählt ist.

6. Süßwarenprodukt nach einem der vorherigen Ansprüche, wobei es sich bei dem Süßwarenprodukt um ein beschichtetes Produkt, vorzugsweise einen beschichteten Kaugummi, ein beschichtetes Gelee, eine beschichtete Tablette, eine beschichtete Weichkaramelle oder ein beschichtetes Schokoladeprodukt handelt.

7. Süßwarenprodukt nach einem der vorherigen Ansprüche, wobei der Produktzusatzstoff aus der Gruppe ausgewählt ist, die aus Zuckern, Zuckeralkoholen, Intensivsüßstoffen, Hydrocolloid, Gummibasis, Weichmachern, Emulgatoren, Eiweißkomponenten, Milchkomponenten, Molkereiinhaltsstoffen, Fett und Fettersatzstoffen, pflanzlichem Fett, Vitaminen, Mineralien, pharmazeutischen Wirkstoffen, Konservierungsmitteln, Aromastoffen, Geschmacksstoffen, wie Pfefferminz, Menthol, Frucht, Erdbeergeschmack, Farbstoffen, TiO₂, Genusssäuren, wie Zitronensäure, und Ballaststoffen besteht.

8. Süßwarenprodukt nach einem der vorherigen Ansprüche, wobei der Zucker aus der Gruppe ausgewählt ist, die aus Isomaltulose, Nutriose, Leucrose und Polydextrose besteht, der Zuckeralkohol aus der Gruppe ausgewählt ist, die aus Xylit, Mannit, Maltit, Erythrit, Lactit und Sorbit besteht, oder beides.

9. Süßwarenprodukt nach einem der vorherigen Ansprüche, wobei der Intensivsüßstoff aus der Gruppe ausgewählt ist, die aus Cyclamat, Saccharin, Aspartam, Glycyrrhizin Neohesperidin-Dihydrochalcon, Steveosid, Thaumatin, Monellin, Acesulfam, Alitam, Sucralose oder ein Gemisch derselben besteht.

10. Verfahren zur Herstellung einer Hartkaramellmasse, die eine Isomaltkomponente in einer Menge von 1 bis 99,8 Gewichtsprozent, eine Geraniol-haltige Aromakomponente in einer Menge von 0,1 bis 5,0 Gewichtsprozent und mindestens einen Produktzusatzstoff in einer Menge von 0,1 bis 98 Gewichtsprozent aufweist, wobei die Isomaltkomponente aus der Gruppe ausgewählt ist, die aus 1,1-GPS (1-O-α-D-Glucopyranosyl-D-sorbit), 1,1-GPM (1-O-α-D-Glucopyranosyl-D-mannit), 1,6-GPS (6-O-α-D-Glucopyranosyl-D-sorbit), Isomaltvarianten, Isomalt, Isomalt GS und ein Gemisch aus Isomalt und Maltit besteht, und wobei es sich bei der Geraniol-haltigen Aromakomponente um ein Geraniol-haltiges Öl handelt, das 5 bis 90 Gewichtsprozent Geraniol (bezogen auf das Gesamtgewicht des Öls) aufweist, und wobei das Verfahren a) das Auflösen der Isomaltkomponente in einem wässrigen Medium, b) das Kochen der erhaltenen Lösung zum Verdampfen des wässrigen Mediums, c) das Kühlen der erhaltenen Masse, d) das Zusetzen und Verteilen des mindestens einen Produktzusatzstoffs, um eine Hartkaramellmasse zu erhalten, aufweist, wobei die Geraniol-haltige Aromakomponente am Ende von Schritt b) oder in Schritt c) oder d) in den gekochten Süßstoff zugegeben und homogen verteilt wird.

11. Verfahren zur Herstellung einer Hartkaramellmasse, die eine Isomaltkomponente in einer Menge von 1 bis 99,8 Gewichtsprozent, eine Geraniol-haltige Aromakomponente in einer Menge von 0,1 bis 5,0 Gewichtsprozent und mindestens einen Produktzusatzstoff in einer Menge von 0,1 bis 98 Gewichtsprozent aufweist, wobei es sich bei der Geraniol-haltigen Aromakomponente um ein Geraniol-haltiges Öl handelt, das 5 bis 90 Gewichtsprozent Geraniol (bezogen auf das Gesamtgewicht des Öls) aufweist, und wobei das Verfahren a') das Schmelzen der Isomaltkomponente, b') das Kühlen der erhaltenen Hartkaramellmasse, c') das Zusetzen und Verteilen des mindestens einen Produktzusatzstoffs aufweist, um eine Hartkaramellmasse zu erhalten, wobei die Geraniol-haltige Aromakomponente in Schritt a'), b') oder c') zugegeben und homogen verteilt wird.

12. Verfahren zur Herstellung einer Hartkaramellmasse nach einem der Ansprüche 10 oder 11, wobei die Hartkaramellmasse nach einem der Ansprüche 10 oder 11 zu einer Hartkaramelle geformt wird.

13. Verfahren zur Herstellung eines beschichteten Süßwarenprodukts, das einen Produktkern und eine Produktbeschichtung aufweist, wobei die Beschichtung als mindestens die Beschichtungsinhattsstoffe zumindest eine Isomaltkomponente, eine Geraniol-haltige Aromakomponente und mindestens einen Produktzusatzstoff, bevorzugt nach einem der Ansprüche 1 bis 9, aufweist, wobei das Verfahren a) das Aufbringen eines Beschichtungsmediums, das zumindest einen Teil der Beschichtungsinhaltsstoffe aufweist, auf den Produktkern und b) das Trocknen des beschichteten Produkts aufweist, um eine Produktbeschichtung zu erhalten, wobei die Beschichtung die Isomaltkomponente in einer Menge von 1 bis 99,8 Gewichtsprozent, die Geraniol-haltige Aromakomponente in einer Menge von 0,1 bis 5,0 Gewichtsprozent und mindestens einen Produktzusatzstoff in einer Menge von 0,1 bis 98 Gewichtsprozent (jeweils bezogen auf das Trockengewicht der Produktbeschichtung) aufweist.

14. Verfahren nach Anspruch 13, wobei das Trocknen in Schritt b) erfolgt, indem das beschichtete Produkt Luft, insbesondere einem Luftstrom, mit einer Temperatur von 20°C bis 80°C, bevorzugt 30°C bis 80°C, ausgesetzt wird.

15. Verfahren nach Anspruch 13 oder 14, wobei das Trocknen in Schritt b) erfolgt, indem in Schritt b) den beschichteten Produkten zumindest ein Teil der Beschichtungsinhaltsstoffe in trockener und Pulverform zugesetzt wird.

16. Verfahren nach Anspruch 13 bis 15, wobei die beschichteten Produkte nach Schritt a) und vor Schritt b) einem Verteilungsschritt unterzogen werden, indem die beschichteten Produkte geschüttelt werden, damit sich eine homogene Verteilung des Beschichtungsmediums auf dem Produktkern einstellen kann.

17. Verfahren nach einem der Ansprüche 13, 14 oder 16, wobei in Schritt a) sämtliche Beschichtungsinhaltsstoffe in Form eines Beschichtungsmediums, insbesondere einer Beschichtungssuspension, aufgetragen werden.

18. Verfahren nach einem der Ansprüche 13 bis 16, wobei ein Teil der Beschichtungsinhaltsstoffe in dem Beschichtungsmedium aufgetragen wird und ein weiterer Teil in trockener und Pulverform aufgetragen wird, und beides in Schritt a) erfolgt.

## Revendications

1. Produit de confiserie comprenant un composant d'isomalt, un composant d'arome contenant du géraniol et au moins un additif de produit, dans lequel le produit de confiserie comprend 1 à 99,8 % en poids du composant d'isomalt, 0,1 à 5,0 % en poids du composant d'arome contenant du géraniol et 0,1 à 98 % en poids de l'au moins un additif de produit (chacun basé sur le poids total du produit de confiserie et l'ensemble des constituants constituant jusqu'à 100 % de la matière sèche du produit de confiserie), dans lequel le composant d'isomalt est sélectionné parmi le groupe constitué du 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), des variantes d'isomalt, l'isomalt, l'isomalt GS et un mélange d'isomalt et de maltitol, et dans lequel le composant d'arome contenant du géraniol est une huile contenant du géraniol comprenant 5 à 90 % en poids (basé sur le poids total d'huile) de géraniol.

2. Produit de confiserie selon la revendication 1, dans lequel le composant d'isomalt est un mélange d'isomalt GS ou ST et de maltitol, un mélange d'isomalt et de sirop de maltitol ou un mélange d'isomalt GS ou ST et de sirop de maltitol.

3. Produit de confiserie selon l'une quelconque des revendications précédentes, dans lequel le mélange d'isomalt et de maltitol comprend 60 à 80 % en poids d'isomalt et 40 à 20 % en poids de maltitol (% en poids basé sur la matière sèche).

4. Produit de confiserie selon l'une quelconque des revendications précédentes, dans lequel le produit de confiserie est exempt de sucre, vise à préserver les dents ou les deux.

5. Produit de confiserie selon l'une quelconque des revendications précédentes, dans lequel le produit est sélectionné parmi le groupe des chewing-gum, caramels durs, caramels mous, caramel au lait, pastille, comprimés, gomme, gelées, guimauves, nougat, pastilles, fudge, fondant ou produits au chocolat.

6. Produit de confiserie selon l'une quelconque des revendications précédentes, dans lequel le produit de confiserie est un produit enrobé, de préférence un chewing-gum enrobé, une gelée enrobée, un comprimé enrobé, un caramel mou enrobé ou un produit au chocolat enrobé.

7. Produit de confiserie selon l'une quelconque des revendications précédentes, dans lequel l'additif de produit est sélectionné parmi le groupe constitué de sucres, alcools de sucre, édulcorants intenses, hydrocolloïde, base de gomme, plastifiants, émulsifiants, composants protéiques, composants de lait, ingrédients laitiers, graisse et substituts de graisse, graisse végétale, vitamines, minéraux, ingrédients pharmaceutiquement actifs, conservateurs, arome, aromatisants, tels que menthe poivrée, menthol, fruit, arome de fraise, colorants, TiO₂, acides comestibles, tels que l'acide citrique, et fibres diététiques.

8. Produit de confiserie selon l'une quelconque des revendications précédentes, dans lequel le sucre est sélectionné parmi le groupe constitué de l'isomaltulose, nutriose, leucrose et polydextrose, l'alcool de sucre est sélectionné parmi le groupe constitué du xylitol, mannitol, maltitol, érythritol, lactitol et sorbitol ou les deux.

9. Produit de confiserie selon l'une quelconque des revendications précédentes, dans lequel l'édulcorant intense est sélectionné parmi le groupe du cyclamate, saccharine, aspartame, glycyrrhicine, néohespéridinedihydrolchalcone, stévéoside, thaumatine, monelline, acésulfame, alitame, sucralose ou un mélange de ceux-ci.

10. Procédé de préparation d'une masse de caramel dur comprenant 1 à 99,8 % en poids d'un composant d'isomalt, 0,1 à 5,0 % en poids d'un composant d'arome contenant du géraniol et 0,1 à 98 % en poids d'au moins un additif de produit, dans lequel le composant d'isomalt est sélectionné parmi le groupe constitué du 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), des variantes d'isomalt, l'isomalt, l'isomalt GS et un mélange d'isomalt et de maltitol, et dans lequel le composant d'arome contenant du géraniol est une huile contenant du géraniol comprenant 5 à 90 % en poids (basé sur le poids total d'huile) de géraniol, et dans lequel le procédé comprend a) dissoudre le composant d'isomalt dans un milieu aqueux, b) faire bouillir la solution obtenue pour faire évaporer le milieu aqueux, c) refroidir la masse obtenue, d) ajouter et distribuer l'au moins un additif de produit pour obtenir une masse de caramel dur, dans lequel le composant d'arome contenant du géraniol est ajouté et distribué de manière homogène dans l'édulcorant bouilli à la fin de l'étape b) ou à l'étape c) ou d).

11. Procédé de préparation d'une masse de caramel dur comprenant 1 à 99,8 % en poids d'un composant d'isomalt, 0,1 à 5,0 % en poids d'un composant d'arome contenant du géraniol et 0,1 à 98 % en poids d'au moins un additif de produit, dans lequel le composant d'arome contenant du géraniol est une huile contenant du géraniol comprenant 5 à 90 % en poids (basé sur le poids total d'huile) de géraniol et dans lequel le procédé comprend a') faire fondre le composant d'isomalt, b') refroidir la masse de caramel dur obtenue, c') ajouter et distribuer l'au moins un additif de produit pour obtenir une masse de caramel dur, dans lequel le composant d'arome contenant du géraniol est ajouté et distribué de manière homogène à l'étape a'), b') ou c').

12. Procédé de préparation d'une masse de caramel dur selon l'une quelconque des revendications 10 ou 11, dans lequel la masse de caramel dur de l'une quelconque des revendications 10 ou 11 est formée en un caramel dur.

13. Procédé de préparation d'un produit de confiserie enrobé comprenant un coeur de produit et un enrobage de produit, l'enrobage comprenant au moins les ingrédients d'enrobage au moins un composant d'isomalt, un composant d'arome contenant du géraniol et au moins un additif de produit, de préférence selon les revendications 1 à 9, lequel comprend a) appliquer un milieu d'enrobage comprenant au moins partiellement les ingrédients d'enrobage audit coeur de produit et b) sécher le produit enrobé de manière à obtenir un enrobage de produit, lequel enrobage comprend 1 à 99,8 % en poids de composant d'isomalt, 0,1 à 5,0 % en poids de composant d'arome contenant du géraniol et 0,1 à 98 % en poids (chacun basé sur le poids sec de l'enrobage de produit) d'au moins un additif de produit.

14. Procédé selon la revendication 13, dans lequel le séchage de l'étape b) est effectué en soumettant le produit enrobé à l'air, notamment un courant d'air, ayant une température de 20°C à 80°C, de préférence 30° à 80°C.

15. Procédé selon la revendication 13 ou 14, dans lequel le séchage de l'étape b) est effectué en ajoutant au moins une partie des ingrédients d'enrobage sous forme sèche et pulvérisée aux produits enrobés au cours de l'étape b).

16. Procédé selon les revendications 13 à 15, dans lequel, après l'étape a) et avant l'étape b), les produits enrobés sont soumis à une étape de distribution, dans lequel les produits enrobés sont agités pour permettre une distribution homogène du milieu d'enrobage sur le coeur de produit.

17. Procédé selon l'une quelconque des revendications 13, 14 ou 16, dans lequel, à l'étape a), l'ensemble des ingrédients d'enrobage est appliqué sous forme d'un milieu d'enrobage, notamment d'une suspension d'enrobage.

18. Procédé selon l'une quelconque des revendications 13 à 16, dans lequel une partie des ingrédients d'enrobage est appliquée dans le milieu d'enrobage et une autre partie est appliquée sous forme sèche et pulvérisée, les deux à l'étape a).
